# EUROPÄISCHE PATENTSCHRIFT

(11) **EP 2 618 177 B1**
(45) Veröffentlichungstag und Bekanntmachung des Hinweises auf die Patenterteilung: **02.08.2017**
(21) Anmeldenummer: 13151428.3
(22) Anmeldetag: 16.01.2013
(51) Int. Cl.: G01S 7/52, G01S 15/93, G01S 15/36

(54) **Verfahren zum Erkennen eines vereisten und/oder verschmutzten Zustands eines Ultraschallsensors in einem Kraftfahrzeug, Sensoreinrichtung und Kraftfahrzeug**
Method for detecting an iced and/or soiled state of an ultrasonic sensor in a motor vehicle, sensor device and motor vehicle
Procédé de détection d'un état givré et/ou souillé d'un capteur à ultrasons dans un véhicule automobile, dispositif de capteur et véhicule automobile

(30) Priorität: 19.01.2012 DE 102012000948
(43) Veröffentlichungstag der Anmeldung: 24.07.2013
(73) Patentinhaber: Valeo Schalter und Sensoren GmbH, 74321 Bietigheim-Bissingen (DE)
(72) Erfinder: Rostocki, Paul-David, 74177 Bad Friedrichshall (DE); Hallek, Michael, 71717 Beilstein (DE)

(56) Entgegenhaltungen:
- EP-A1- 2 381 271
- EP-A2- 1 410 950
- DE-A1-102009 040 992
- DE-A1-102010 003 624
- GB-A- 2 188 420

## Beschreibung

Die Erfindung betrifft ein Verfahren zum Erkennen eines vereisten und/oder verschmutzten Zustandes eines Ultraschallsensors eines Kraftfahrzeugs mithilfe einer elektronischen Steuereinrichtung des Kraftfahrzeugs, mittels welcher der Ultraschallsensor angesteuert wird. Eine Membran des Ultraschallsensors wird mittels der Steuereinrichtung zu einer mechanischen Schwingung (zum Aussenden eines Ultraschalls) für ein vorbestimmtes Anregungszeitintervall angeregt, sodass nach Ablauf des Anregungszeitintervalls die Membran selbstständig ausschwingt. Es wird ein die mechanische Schwingung der Membran charakterisierendes elektrisches Sensorsignal mittels eines Wandlerelements erzeugt und an die Steuereinrichtung abgegeben. Die Erfindung betrifft außerdem eine Sensoreinrichtung, welche zum Durchführen eines solchen Verfahrens ausgebildet ist, wie auch ein Kraftfahrzeug mit einer derartigen Sensoreinrichtung.

Es ist bereits Stand der Technik, ein Kraftfahrzeug - etwa einen Personenkraftwagenmit einer Vielzahl von Ultraschallsensoren auszustatten. Die Ultraschallsensoren sind in der Regel Bestandteile eines so genannten "Parkhilfesystems", welches auch unter der Bezeichnung "Einparkhilfe" bekannt ist. Üblicherweise sind eine Vielzahl von Ultraschallsensoren sowohl an dem vorderen als auch an dem hinteren Stoßfänger des Kraftfahrzeugs verteilt angeordnet. Die Ultraschallsensoren arbeiten nach dem Echolaufzeitverfahren. Dies bedeutet, dass ein Ultraschallsensor Ultraschallwellen aussenden und die an Objekten reflektierten Ultraschallwellen wieder empfangen kann. In Abhängigkeit von der Laufzeit der Ultraschallwellen wird dann die Entfernung des Objektes von dem Ultraschallsensor und somit von dem Kraftfahrzeug ausgerechnet.

Es kann auch vorkommen, dass ein Ultraschallsensor mit Eis und/oder mit Schmutz verdeckt bzw. blockiert wird. Verfahren zum Erkennen eines solchen vereisten und/oder verschmutzten Zustandes eines Ultraschallsensors sind bereits Stand der Technik. Einerseits kann der vereiste und/oder verschmutzte Zustand des Ultraschallsensors in Abhängigkeit von der Ausschwingzeit der Membran detektiert werden, also der Zeit, welche zum selbstständigen Ausschwingen der Membran nach ihrer Anregung benötigt wird. Andererseits offenbart die Druckschrift DE 10°2009°040°992°A1 ein Verfahren, bei welchem der vereiste und/oder verschmutzte Zustand des Ultraschallsensors in Abhängigkeit von der Ausschwingfrequenz der Membran festgestellt wird, d. h. von der Frequenz der selbstständigen Schwingung der Membran. Beide Methoden beruhen darauf, dass mit dem Eis bzw. dem Schmutz sich auch die Schwingmasse der Membran ändert. Es hat sich jedoch herausgestellt, dass diese bekannten Verfahren auch weiterhin verbessert werden können. Die Ausschwingzeit ist nämlich auch abhängig von der aktuellen Umgebungstemperatur, sodass nicht immer zuverlässig festgestellt werden kann, ob sich die Ausschwingzeit aufgrund der Umgebungstemperatur oder aber aufgrund der Vereisung bzw. Verschmutzung des Ultraschallsensors verändert hat.

Es ist Aufgabe der Erfindung, eine Lösung aufzuzeigen, wie bei einem Verfahren der eingangs genannten Gattung der vereiste und/oder verschmutzte Zustand des Ultraschallsensors besonders zuverlässig detektiert werden kann.

Diese Aufgabe wird erfindungsgemäß durch ein Verfahren, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird ein vereister und/oder verschmutzter Zustand - also ein zumindest teilweise blockierter Zustand - eines Ultraschallsensors eines Kraftfahrzeugs mithilfe einer elektronischen Steuereinrichtung des Kraftfahrzeugs erkannt. Eine Membran des Ultraschallsensors wird zu einer mechanischen Schwingung für ein vorbestimmtes Anregungszeitintervall angeregt, und nach Ablauf des Anregungszeitintervalls schwingt die Membran selbstständig aus. Mittels eines Wandlerelements - beispielsweise eines Piezoelements - wird ein elektrisches Sensorsignal erzeugt und an die Steuereinrichtung abgegeben, welches die mechanische Schwingung der Membran charakterisiert. Der zeitliche Verlauf des elektrischen Sensorsignals entspricht also dem zeitlichen Verlauf der mechanischen Schwingung der Membran. Erfindungsgemäß ist vorgesehen, dass mittels der Steuereinrichtung eine Änderung in der Phase des Sensorsignals beim Übergang von dem Anregungszeitintervall in die selbstständige Schwingung der Membran bestimmt wird und der vereiste und/oder verschmutzte Zustand des Ultraschallsensors in Abhängigkeit von der Änderung in der Phase festgestellt wird.

Die Erfindung geht also den Weg, zur Dedektion des zumindest teilweise blockierten Zustandes des Ultraschallsensors die Phasenlage des elektrischen Sensorsignals zu bestimmen, und zwar in einem Übergangsbereich von dem Anregungszeitintervall - also von der aktiven Anregung der Membran - zur selbstständigen Schwingung der Membran. Die Erfindung beruht dabei auf der Erkenntnis, dass die Änderung in der Phase des Sensorsignals beim Übergang zur selbstständigen Schwingung bzw. unmittelbar nach Ablauf des Anregungszeitintervalls eine eindeutige Aussage darüber ermöglicht, ob der Ultraschallsensor vereist und/oder verschmutzt ist. Es hat sich nämlich herausgestellt, dass beim Übergang in die selbstständige Schwingung das elektrische Sensorsignal einen Phasensprung aufweist, dessen Länge sich in Abhängigkeit von den Grad der Vereisung bzw. Verschmutzung verändert. Das erfindungsgemäße Verfahren ermöglicht also eine besonders zuverlässige Feststellung des vereisten und/oder verschmutzten Zustandes des Ultraschallsensors, und zwar auch unabhängig von der Umgebungstemperatur. Durch die Auswertung der Änderung in der Phase ist es sogar möglich, den Grad der Vereisung und/oder Verschmutzung des Ultraschallsensors zu bestimmen.

Unter der Änderung in der Phase des Sensorsignals wird vorliegend also eine Differenz zwischen der Phase des Sensorsignals innerhalb des Anregungszeitintervalls einerseits und der Phase des Sensorsignals bei der selbstständigen Schwingung der Membran nach dem Anregungszeitintervall andererseits verstanden.

Die Erkennung des vereisten und/oder verschmutzten Zustandes kann beispielsweise so erfolgen, dass mittels der Steuereinrichtung die Änderung in der Phase des Sensorsignals mit einem abgelegten Referenzwert verglichen wird und der vereiste und/oder verschmutzte Zustand des Ultraschallsensors in Abhängigkeit von einem Ergebnis dieses Vergleiches festgestellt wird. Diese Ausführungsform ist besonders aufwandsarm zu implementieren; die Steuereinrichtung braucht lediglich die ermittelte Änderung in der Phase des Sensorsignals mit dem abgelegten Referenzwert zu vergleichen, um eindeutig feststellen zu können, ob oder ob nicht der Ultraschallsensor vereist und/oder verschmutzt ist. Es kann auch vorgesehen sein, dass in der Steuereinrichtung eine Vielzahl von unterschiedlichen Referenzwerten abgelegt sind und in Abhängigkeit von einem Vergleich der ermittelten Änderung in der Phase mit den abgelegten Referenzwerten der Grad der Vereisung und/oder Verschmutzung des Ultraschallsensors durch die Steuereinrichtung bestimmt wird. Mit anderen Worten kann in der Steuereinrichtung eine Vielzahl von unterschiedlichen Wertebereichen definiert sein, und die Steuereinrichtung kann überprüfen, in welchen der Wertebereiche die ermittelte Phasenänderung fällt. In Abhängigkeit davon kann dann durch die Steuereinrichtung der tatsächliche Grad der Verschmutzung und/oder Vereisung des Ultraschallsensors bestimmt werden.

In einer Ausführungsform ist vorgesehen, dass nach Erkennen des vereisten und/oder verschmutzten Zustandes des Ultraschallsensors die Steuereinrichtung ein Warnsignal ausgibt. Mit einem solchen Warnsignal kann der Fahrer des Kraftfahrzeugs darüber informiert werden, dass der Ultraschallsensor vereist und/oder verschmutzt ist. Auf diese Weise wird der Fahrer darauf hingewiesen, dass die aktuell gelieferten Abstandswerte gegebenenfalls auch inkorrekt sein können und der Ultraschallsensor wieder freigegeben werden soll. Bei dem Warnsignal kann es sich beispielsweise um eine optische Anzeige in einem Kombiinstrument des Kraftfahrzeugs und/oder um ein akustisches Signal und/oder um ein haptisches Signal handeln.

Eine erfindungsgemäße Sensoreinrichtung für ein Kraftfahrzeug umfasst einen Ultraschallsensor mit einer Membran, wie auch eine elektronische Steuereinrichtung zum Anregen der Membran zu einer mechanischen Schwingung für ein vorbestimmtes Anregungszeitintervall, sodass nach Ablauf des Anregungszeitintervalls die Membran selbstständig ausschwingt. Die Sensoreinrichtung beinhaltet auch ein Wandlerelement zum Erzeugen eines die mechanische Schwingung der Membran charakterisierenden elektrischen Sensorsignals und zum Abgeben des Sensorsignals an die Steuereinrichtung. Die Steuereinrichtung ist dazu eingerichtet, eine Änderung in der Phase des Sensorsignals beim Übergang von dem Anregungszeitintervall in die selbstständige Schwingung der Membran zu bestimmen und in Abhängigkeit von der Änderung in der Phase einen vereisten und/oder verschmutzten Zustand des Ultraschallsensors zu erkennen.

Ein erfindungsgemäßes Kraftfahrzeug umfasst eine erfindungsgemäße Sensoreinrichtung. Die in Bezug auf das erfindungsgemäße Verfahren vorgestellten bevorzugten Ausführungsformen und deren Vorteile gelten entsprechend für die erfindungsgemäße Sensoreinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Dabei zeigen:
- Fig. 1: in schematischer und höchstabstrakter Darstellung ein Blockschaltbild eines Ultraschallsensors eines Kraftfahrzeugs gemäß einer Ausführungsform der Erfindung;
- Fig. 2: einen zeitlichen Verlauf eines Sensorsignals, welches eine mechanische Schwingung einer Membran charakterisiert;
- Fig. 3: eine vergrößerte Darstellung eines Übergangs von einem Anregungszeitintervall in eine selbstständige Schwingung der Membran, wobei der Ultraschallsensor weder verschmutzt noch vereist ist; und
- Fig. 4 bis 6: jeweils eine vergrößerte Darstellung des Übergangs, wobei unterschiedliche Phasensprünge aufgrund einer Vereisung und/oder Verschmutzung des Ultraschallsensors dargestellt sind.

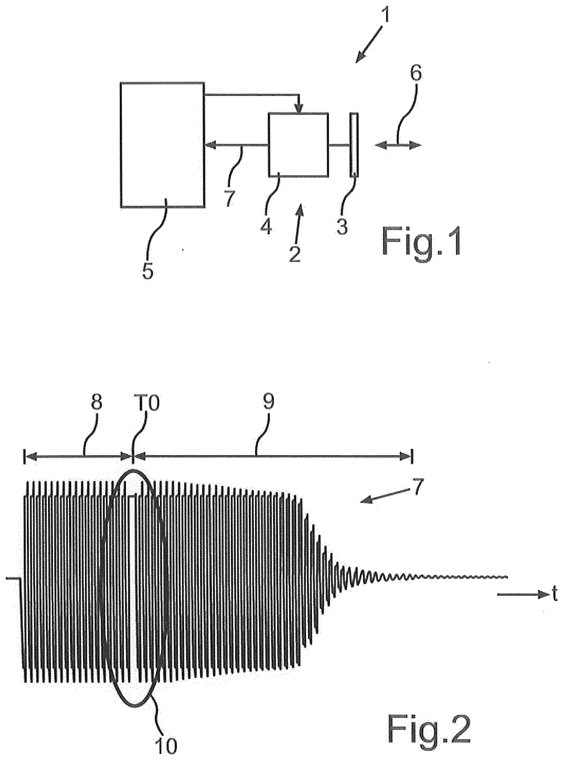

In Figur 1 ist ein Blockschaltbild einer Sensoreinrichtung 1 gemäß einer Ausführungsform der Erfindung dargestellt. Die Sensoreinrichtung 1 beinhaltet einen Ultraschallsensor 2, welcher eine Membran 3 sowie ein Wandlerelement 4 umfasst. Das Wandlerelement 4 kann beispielsweise ein piezoelektrisches Element sein. Zur Sensoreinrichtung 1 gehört außerdem eine Steuereinrichtung 5, welche zur Ansteuerung des Ultraschallsensors 2 dient. Es kann auch vorgesehen sein, dass alle Komponenten, nämlich die Membran 3, das Wandlerelement 4 und die Steuereinrichtung 5, in einem gemeinsamen Sensorgehäuse untergebracht sind. Alternativ kann jedoch auch vorgesehen sein, dass die Membran 3 und das Wandlerelement 4 in einem gemeinsamen Sensorgehäuse angeordnet sind, während die Steuereinrichtung 5 außerhalb des Gehäuses angeordnet und mit dem Sensorgehäuse elektrisch verbunden ist. Die Sensoreinrichtung 1, wie sie in Figur 1 schematisch dargestellt ist, kann in einem Kraftfahrzeug eingesetzt werden. Sie dient dann beispielsweise als eine Einparkhilfe des Kraftfahrzeugs.

Die Membran 3 ist zum Aussenden und zum Empfangen von Ultraschallwellen 6 ausgebildet. Um die Ultraschallwellen auszusenden, wird die Membran 3 zu einer mechanischen Schwingung angeregt, und zwar mittels der Steuereinrichtung 5 über das Wandlerelement 4. Dies kann so aussehen, dass die Steuereinrichtung 5 das Wandlerelement 4 mit einer elektrischen Spannung beaufschlagt und das Wandlerelement 4 die mechanische Schwingung aufgrund der elektrischen Spannung erzeugt. Und umgekehrt erzeugt das Wandlerelement 4 ein elektrisches Sensorsignal 7 aufgrund einer mechanischen Schwingung der Membran 3. Dieses Sensorsignal 7 charakterisiert dann die mechanische Schwingung der Membran 3. Mit anderen Worten entspricht der zeitliche Verlauf des Sensorsignals 7 dem zeitlichen Verlauf der harmonischen Schwingung der Membran 3.

Nun gilt das Interesse der Bestimmung eines zumindest teilweise blockierten Zustandes der Membran 3, nämlich eines verschmutzten und/oder vereisten Zustandes des Ultraschallsensors 2. Zu diesem Zwecke regt die Steuereinrichtung 5 die Membran 3 zu einer mechanischen Schwingung an, und zwar für ein vorbestimmtes Anregungszeitintervall 8 (siehe Figur 2). Hierbei erzeugt die Steuereinrichtung 5 eine elektrische Spannung, welche an das Wandlerelement 4 angelegt wird und welche die mechanische Schwingung der Membran 3 verursacht. Diese mechanische Schwingung ist eine harmonische Schwingung. Nach Ablauf des Anregungszeitintervalls 8 wird die elektrische Spannung wieder abgestellt, und die Membran 3 kann selbstständig ausschwingen. Während der mechanischen Schwingung der Membran 3 - nämlich während der aktiven Schwingung sowie während des Ausschwingens - erzeugt das Wandlerelement 4 das Sensorsignal 7, welches an die Steuereinrichtung 5 abgegeben wird. Ein beispielhafter zeitlicher Verlauf dieses Sensorsignals 7 ist in Figur 2 dargestellt. Figur 2 zeigt also die Abhängigkeit der Amplitude des Sensorsignals 7 von der Zeit t. Während des Anregungszeitintervalls 8 wird die Membran 3 aktiv angeregt, nämlich unter Bereitstellung der elektrischen Spannung an das Wandlerelement 4. Nach Ablauf des Anregungszeitintervalls 8, also zu einem Zeitpunkt T0, erlischt die elektrische Spannung am Wandlerelement 4, sodass ab dem Zeitpunkt T0 die Membran 3 selbstständig ausschwingt, nämlich während eines Ausschwingszeitintervalls 9.

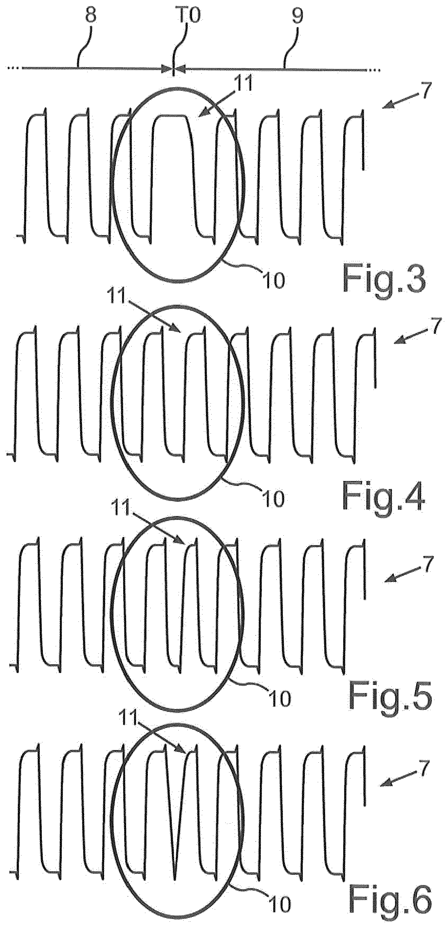

Um den blockierten Zustand des Ultraschallsensors 2 festzustellen, wird mittels der Steuereinrichtung 5 die Phase des Sensorsignals 7 in einem Übergangsbereich 10 von dem Anregungszeitintervall 8 in das Ausschwingzeitintervall 9 ausgewertet. Wie aus Figur 2 und noch deutlicher aus Figur 3 hervorgeht, weist das Sensorsignal 7 beim Übergang von dem Anregungszeitintervall 8 in die selbstständige Schwingung einen Phasensprung 11 auf, dessen Länge davon abhängt, ob der Ultraschallsensor 2 verschmutzt und/oder vereist ist oder nicht. Die Steuereinrichtung 5 berechnet also die Änderung in der Phase des Sensorsignals 7 bei dem Übergang vom Anregungszeitintervall 8 ins Ausschwingszeitintervall 9 und bestimmt in Abhängigkeit von der Änderung der Phase, ob der Ultraschallsensor 2 verschmutzt und/oder vereist ist oder auch nicht.

In Figur 3 ist dabei eine vergrößerte Darstellung des zeitlichen Verlaufes des Sensorsignals 7 aus Figur 2 gezeigt. Die in Figur 3 dargestellte Phasenlage des Sensorsignals 7 im Übergangsbereich 10 entspricht dem Fall, dass der Ultraschallsensor 2 weder vereist noch verschmutzt ist, also freigegeben ist und ordnungsgemäß funktioniert. Dem gegenüber sind in den Figuren 4 bis 6 Beispiele gezeigt, bei denen der Ultraschallsensor 2 vereist bzw. verschmutzt ist. Wie aus den Figuren 4 bis 6 hervorgeht, sind die Phasenlagen des Sensorsignals 7 beim verschmutzten und/oder vereisten Ultraschallsensor 2 deutlich unterschiedlich als die Phasenlage des Sensorsignals 7 gemäß Figur 3. Wie sich nämlich herausgestellt hat, ist die Länge des Phasensprunges davon abhängig, ob oder ob nicht und in welchem Ausmaß der Ultraschallsensor 2 vereist und/oder verschmutzt ist.

Die Steuereinrichtung 5 kann also die Phasenänderung des Sensorsignals 7 im Übergangsbereich 10 bestimmen. Die Steuereinrichtung 5 vergleicht dann beispielsweise die berechnete Änderung der Phase bzw. die Länge des Phasensprunges mit einem abgelegten Referenzwert. Anhand dieses Vergleiches kann die Steuereinrichtung dann feststellen, ob oder ob nicht und gegebenenfalls auch in welchem Ausmaß der Ultraschallsensor 2 verschmutzt und/oder vereist ist.

Wird ein verschmutzter und/oder vereister Zustand erkannt, so kann die Steuereinrichtung 5 ein Warnsignal ausgeben. Mit einem solchen Warnsignal kann der Fahrer des Kraftfahrzeugs dann über den blockierten Zustand des Ultraschallsensors 2 informiert werden, etwa über ein Leuchtmittel im Kombiinstrument.

## Patentansprüche

1. Verfahren zum Erkennen eines vereisten und/oder verschmutzten Zustands eines Ultraschallsensors (2) eines Kraftfahrzeugs mithilfe einer elektronischen Steuereinrichtung (5) des Kraftfahrzeugs durch
- Anregen einer Membran (3) des Ultraschallsensors (2) zu einer mechanischen Schwingung für ein vorbestimmtes Anregungszeitintervall (8) mittels der Steuereinrichtung (5), wobei nach Ablauf des Anregungszeitintervalls (8) die Membran (3) selbstständig ausschwingt, und
- Erzeugen eines die mechanische Schwingung der Membran (3) charakterisierenden elektrischen Sensorsignals (7) mittels eines Wandlerelements (4) und Abgeben des Sensorsignals (7) an die Steuereinrichtung (5),
**dadurch gekennzeichnet, dass**
mittels der Steuereinrichtung (5) eine Änderung in der Phase des Sensorsignals (7) beim Übergang (10) von dem Anregungszeitintervall (8) in die selbstständige Schwingung der Membran (3) bestimmt wird und der vereiste und/oder verschmutzte Zustand des Ultraschallsensors (2) in Abhängigkeit von der Änderung in der Phase erkannt wird.

2. Verfahren nach Anspruch 1,
**dadurch gekennzeichnet, dass**
mittels der Steuereinrichtung (5) die Änderung in der Phase des Sensorsignals (7) mit einem in der Steuereinrichtung (5) abgelegten Referenzwert verglichen wird und der vereiste und/oder verschmutzte Zustand des Ultraschallsensors (2) in Abhängigkeit von einem Ergebnis dieses Vergleichs festgestellt wird.

3. Verfahren nach Anspruch 1 oder 2,
**dadurch gekennzeichnet, dass**
falls der vereiste und/oder verschmutzte Zustand des Ultraschallsensors (2) erkannt wird, ein Warnsignal mittels der Steuereinrichtung (5) ausgegeben wird.

4. Sensoreinrichtung (1) für ein Kraftfahrzeug, mit:
- einem Ultraschallsensor (2) mit einer Membran (3),
- einer elektronischen Steuereinrichtung (5) zum Anregen der Membran (3) zu einer mechanischen Schwingung für ein vorbestimmtes Anregungszeitintervall (8), so dass nach Ablauf des Anregungszeitintervalls (8) die Membran (3) selbstständig ausschwingt, und
- einem Wandlerelement (4) zum Erzeugen eines die mechanische Schwingung der Membran (3) charakterisierenden elektrischen Sensorsignals (7) und zum Abgeben des Sensorsignals (7) an die Steuereinrichtung (5),
**dadurch gekennzeichnet, dass**
die Steuereinrichtung (5) dazu eingerichtet ist, eine Änderung in der Phase des Sensorsignals (7) beim Übergang (10) von dem Anregungszeitintervall (8) in die selbstständige Schwingung der Membran (3) zu bestimmen und in Abhängigkeit von der Änderung in der Phase einen vereisten und/oder verschmutzten Zustand des Ultraschallsensors (2) zu erkennen.

5. Kraftfahrzeug mit einer Sensoreinrichtung (1) nach Anspruch 4.

## Claims

1. Method for detecting an icy and/or soiled state of an ultrasonic sensor (2) of a motor vehicle with the aid of an electronic control device (5) of the motor vehicle by
- exciting a diaphragm (3) of the ultrasonic sensor (2) to mechanically vibrate for a predetermined excitation time interval (8) by means of the control device (5), the diaphragm (3) independently settling after expiry of the excitation time interval (8), and
- generating an electrical sensor signal (7) which characterizes the mechanical vibration of the diaphragm (3) by means of a converter element (4) and outputting the sensor signal (7) to the control device (5),
**characterized in that**
a change in the phase of the sensor signal (7) during the transition (10) from the excitation time interval (8) to the independent vibration of the diaphragm (3) is determined by means of the control device (5) and the icy and/or soiled state of the ultrasonic sensor (2) is detected on the basis of the change in the phase.

2. Method according to Claim 1,
**characterized in that**
the change in the phase of the sensor signal (7) is compared with a reference values stored in the control device (5) by means of the control device (5) and the icy and/or soiled state of the ultrasonic sensor (2) is determined on the basis of a result of this comparison.

3. Method according to Claim 1 or 2,
**characterized in that**
a warning signal is output by means of the control device (5) if the icy and/or soiled state of the ultrasonic sensor (2) is detected.

4. Sensor device (1) for a motor vehicle, having:
- an ultrasonic sensor (2) with a diaphragm (3),
- an electronic control device (5) for exciting the diaphragm (3) to mechanically vibrate for a predetermined excitation time interval (8), with the result that the diaphragm (3) independently settles after expiry of the excitation time interval (8), and
- a converter element (4) for generating an electrical sensor signal (7) which characterizes the mechanical vibration of the diaphragm (3) and for outputting the sensor signal (7) to the control device (5),
**characterized in that**
the control device (5) is set up to determine a change in the phase of the sensor signal (7) during the transition (10) from the excitation time interval (8) to the independent vibration of the diaphragm (3) and to detect an icy and/or soiled state of the ultrasonic sensor (2) on the basis of the change in the phase.

5. Motor vehicle having a sensor device (1) according to Claim 4.

## Revendications

1. Procédé de détection d'un état givré et/ou sali d'un capteur à ultrasons (2) d'un véhicule automobile à l'aide d'un dispositif de commande électronique (5) du véhicule automobile, consistant à :
- exciter une membrane (3) du capteur à ultrasons (2) pour le mettre en oscillation pendant un intervalle de temps d'excitation (8) prédéterminé au moyen du dispositif de commande (5), dans lequel la membrane (3) oscille de manière autonome après l'écoulement de l'intervalle de temps d'excitation (8), et
- générer un signal électrique de capteur (7) caractérisant l'oscillation mécanique de la membrane (3) au moyen d'un élément transducteur (4) et délivrer le signal de capteur (7) au dispositif de commande (5),
**caractérisé en ce qu'**une modification de la phase du signal de capteur (7) lors d'une transition (10) de l'intervalle de temps d'excitation (8) à l'oscillation autonome de la membrane (3) est déterminée au moyen du dispositif de commande (5) et **en ce que** l'état givré et/ou sali du capteur à ultrasons (2) est détecté en fonction de la modification de la phase.

2. Procédé selon la revendication 1,
**caractérisé en ce que** la modification de la phase du signal de capteur (7) est comparée, au moyen du dispositif de commande (5), à une valeur de référence dans le dispositif de commande (5) et **en ce que** l'état givré et/ou sali du capteur à ultrasons (2) est établi en fonction d'un résultat de ladite comparaison.

3. Procédé selon la revendication 1 ou 2,
**caractérisé en ce que**, dans le cas où l'état givré et/ou sali du capteur à ultrasons (2) est détecté, un signal d'alarme est délivré au moyen du dispositif de commande (5).

4. Dispositif capteur (1) destiné à un véhicule automobile, comportant :
- un capteur à ultrasons (2) muni d'une membrane (3),
- un dispositif de commande électronique (5) destiné à exciter la membrane (3) pour la mettre en oscillation mécanique pendant un intervalle de temps d'excitation (8) prédéterminé, de manière à ce que la membrane (3) oscille de manière autonome après l'écoulement de l'intervalle de temps d'excitation (8), et
- un élément transducteur (4) destiné à générer un signal de capteur (7) électrique caractérisant l'oscillation mécanique de la membrane (3) et à délivrer le signal de capteur (7) au dispositif de commande (5),
**caractérisé en ce que** le dispositif de commande (5) est conçu pour déterminer une modification de la phase du signal de capteur (7) lors d'une transition (10) de l'intervalle de temps d'excitation (8) à l'oscillation autonome de la membrane (3) et pour détecter un état givré et/ou sali du capteur à ultrasons (2) en fonction de la modification de la phase.

5. Véhicule automobile comportant un dispositif capteur selon la revendication 4.
